# EUROPEAN PATENT APPLICATION

(11) **EP 1 055 619 A1**
(43) Date of publication of application: **29.11.2000**
(21) Application number: 00110224.3
(22) Date of filing: 18.05.2000
(51) Int. Cl.: B65G 65/00, B65G 13/06, F16D 1/104

(54) **Modular device for engaging and motorizing free rollers which compose movable conveyance and storage surfaces**

(30) Priority: 26.05.1999 IT MO990117
(71) Applicant: GRUPPO BARBIERI & TAROZZI S.r.l., 41043 Formigine (Modena) (IT)
(72) Inventor: Tarozzi, Fausto, 20145 Milano (IT)
(74) Representative: Modiano, Guido, Dr.-Ing.

(57) **Abstract**

The device for engaging and motorizing free rollers composing movable conveyance and storage surfaces is constituted by a block (3) for positioning and fixing along a supporting longitudinal member (4); the block (3) is crossed by a shaft (5) which is supported so as to rotate freely and supports, at one end which protrudes from the block (3), means (6) for coupling to elements for transmitting rotary motion and, at the opposite end, a sleeve (7) which can slide coaxially back and forth and is provided with means (8) for sliding contact with at least one set of three flexible laminae (9) which are supported in a cantilevered manner by a head (10) which is rigidly coupled to the shaft (5) inside the sleeve (7), the active stroke of the sleeve (7) in a distal direction with respect to the block (3) causing the centripetal mutual closure of the laminae (9), the return stroke causing their mutual spacing.

## Description

The present invention relates to a modular device for engaging and motorizing free rollers which compose movable conveyance and storage surfaces.

Conveyance surfaces composed of a plurality of free rollers, supported at their ends by corresponding sides in which contoured openings for retaining them and supporting them are provided, have long been used to convey products of different kinds.

These openings are teardrop-shaped and tapered downwards, and the ends of the rollers are also shaped so as to protrude from the openings but be bilaterally contained within the sides in a static resting configuration.

In practice, the ends of the rollers are provided with coaxial protrusions which are substantially smaller in diameter than the active portions of the rollers, so that the collar that is provided in the connecting point acts as a retention element when the rollers rest on the tapered bottom of the openings.

A particular application of this technology is the manufacture of rack-like trolleys for storing and conveying flat products, specifically in the production of ceramic tiles.

These trolleys, better known as "boxes", are in fact composed of tall sides rising from a footing and are joined, at the top, by a covering surface or by reinforcement cross-members; rows and columns of the tapered openings are formed in the sides.

Each row composes a horizontal surface on which the tiles can be accumulated.

The rollers that compose these conveyance surfaces are driven in different ways: it is in fact necessary to alternately lift each row of rollers that composes a surface and to simultaneously rotate all of the rollers, so that the tiles, or any product that rests on these rollers, move in the intended direction for entering or leaving the box.

The same occurs for a single conveyance surface not inserted in a box.

According to some embodiments, the motorization is entrusted to a series of motorized bars which are supported by one or two parallel arms which can slide on a portal-shaped frame and are fitted in the ends of the rollers that protrude from the sides; the arm or arms is/are then raised slightly so as to stop the rollers from being supported with friction and are then made to turn, keeping their ends centered in the respective openings.

Once the movement step has ended, the arms deposit the row of rollers back into their seats and move so as to engage the rollers of another surface, until the operations for loading or unloading the box are completed.

An alternative embodiment consists in lifting corresponding ends of the rollers of each surface with a motorized high-grip belt, which is again supported by an arm, and in providing the opposite ends with antifriction bushings; after lifting the corresponding ends, the belt is turned and all the rollers of one surface turn simultaneously with it by contact produced by gravity.

The above-described embodiments adopted so far for engaging and motorizing the rollers of a supporting surface provide excellent performance but are substantially complicated and expensive to provide.

The precision of the coupling between the ends of the rollers and the corresponding motorized bars also requires substantially complicated refinements which can be hindered by the variety of the range of diameters of the rollers that are commercially available for this application, by the load conditions of the rollers, and therefore by any flexing to which the rollers are subjected.

The aim of the present invention is to solve the above problems of the prior art, by providing a modular device for engaging and motorizing free rollers composing movable conveyance and storage surfaces which is very simple in concept, cheap to provide and effective in any loading condition of the rollers composing the conveyance surfaces, allows to engage the ends of the rollers with a certain tolerance in coupling precision, and which automatically adapts to the diameters of the rollers used.

These and other objects are achieved by a device for engaging and motorizing free rollers which compose movable conveyance and storage surfaces, characterized in that it is constituted by a block for positioning and fixing along a supporting longitudinal member, the block being crossed by a shaft which is supported so that it can rotate freely and supports, at one end which protrudes from the block, means for coupling to elements for transmitting rotary motion and, at the opposite end, a sleeve which can slide coaxially back and forth and is provided with means for sliding contact with at least one set of three flexible laminae which are supported in a cantilevered manner by a head which is rigidly coupled to said shaft inside said sleeve, the active stroke of said sleeve in a distal direction with respect to the block causing the centripetal mutual closure of the laminae, the return stroke causing their mutual spacing.

Further characteristics and advantages will become better apparent from the following detailed description of a preferred embodiment of a modular device for engaging and motorizing free rollers composing movable conveyance and storage surfaces, illustrated only by way of non-limitative example in the accompanying drawings, wherein:

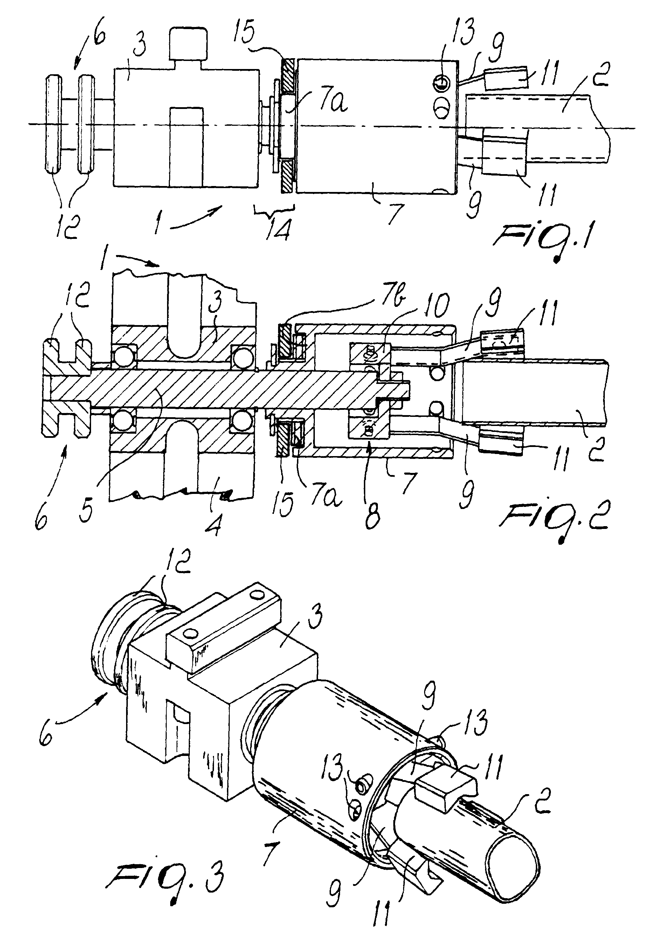

Figure 1 is a front view of the modular device according to the invention;
Figure 2 is a corresponding longitudinal sectional view thereof;
Figure 3 is a perspective view of the device according to the invention in the condition in which it engages the head of a roller of a conveyance and storage surface;

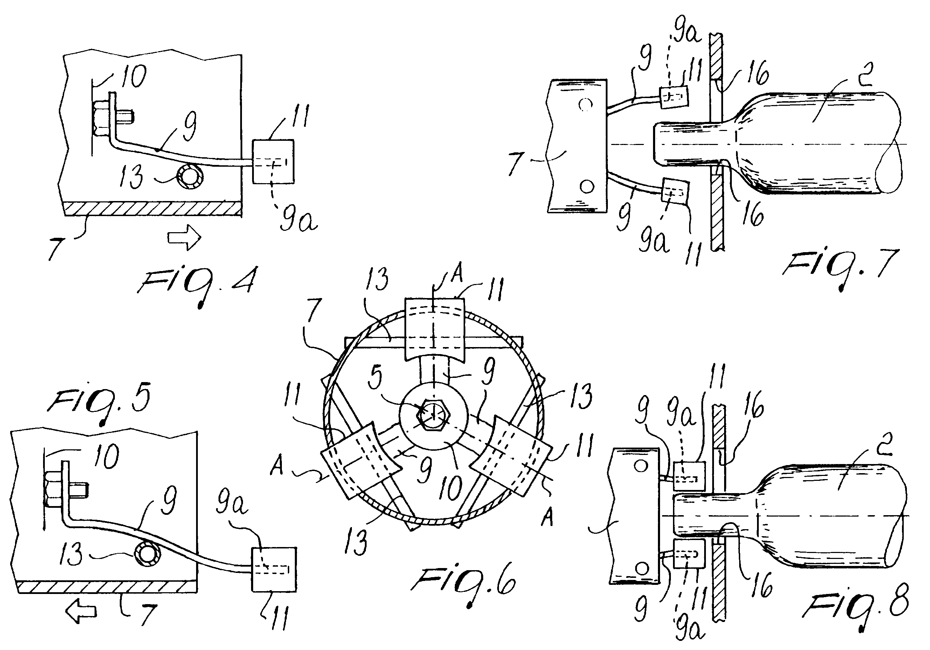

Figures 4 and 5 are schematic views of a portion of a sleeve which constitutes the device according to the invention, in the engagement position and in the release position, respectively;
Figure 6 is a view of the device according to the invention, taken from the engagement side;
Figures 7 and 8 are views of the end portion of a sleeve that constitutes the device according to the invention, respectively in the conditions for releasing and engaging the head of a roller that composes a conveyance surface.

With reference to the above figures, 1 designates a device for engaging and motorizing free rollers 2 which compose movable conveyance and storage surfaces.

The device 1 is constituted by a block 3 for positioning and fixing along a supporting longitudinal member 4; this block is crossed by a shaft 5 supported so as to rotate freely and supports, at one end which protrudes from the block 3, means 6 for coupling to elements for transmitting rotary motion and, at the opposite end, a sleeve 7 which can slide coaxially back and forth on the shaft and is provided with means 8 for sliding contact with at least one set of three flexible laminae 9 which are supported so as to cantilever out from a head 10 which is rigidly coupled to the shaft 5 and is contained inside the sleeve 7.

The laminae 9 are substantially sinusoidal in shape so as to diverge radially with respect to the head 10; they are further provided, at their free ends 9a, with corresponding pads 11 made of high-grip elastomeric material.

The transmission means 6 are constituted by two toothed wheels 12, or by a sprocket, which are keyed onto the respective end of the shaft 5 for coupling to a motorized chain which is closed in a loop (not shown) and is supported by a corresponding conventional supporting means.

The sliding contact means 8 are constituted by a set of three pins 13 inserted so as to pass through the sleeve 7 transversely and in succession at the end of said sleeve 7 that is directed towards the laminae 9.

Both these laminae and the pins 13 are arranged so as to be radially mutually aligned in mutual contact along radial axes of symmetry A which lie at 120° with respect to each other.

A groove 14 is provided, between the block 3 and the sleeve 7, for the insertion of an element, in practice a comb 15, for activating by contact the active stroke of the sleeve 7; this sleeve has, for this purpose, a pivoting ring 7a (or a bearing) which is arranged coaxially in a seat 7b formed in the dorsal end of said sleeve 7 for contact, with low rolling friction, with the comb 15.

The operation of the invention is as follows: a series of devices 1 is arranged and fixed in succession on a longitudinal member 4, which constitutes for example an arm of a machine for loading and unloading boxes, rigidly coupling the blocks 3 thereto by virtue of conventional screw means.

The pairs of toothed wheels 12 are made to engage a chain which is closed in a loop (and is not shown because it is of a conventional type), which is supported by the longitudinal member 4 and is adapted to simultaneously motorize all the shafts 5 so as to rotate when required.

A comb 15 is arranged parallel to the longitudinal member 4 and is adapted to alternately enter the groove 14, in order to simultaneously move all the sleeves 7 outwards, or to retract from it, in order to allow said sleeves to perform the return stroke; pivoting rings 7a (or bearings) are interposed between the dorsal ends of the sleeves 7 and the comb 15 and allow the sleeves 7 to rotate when the comb 15 is inserted in the groove 14.

The outward movement of each sleeve 7 produces the sliding of the pins 13 on the laminae 9, which by having a sinusoidal shape or by being otherwise shaped so as to diverge radially outwards, are compressed centripetally.

If the longitudinal member 4 is arranged proximate to a surface with freely movable rollers and the heads of each roller 2 are arranged between said laminae, said centripetal compression causes their clamping like a set of chucks.

The pads 11 made of elastomeric material ensure engagement without slippage in a rotary direction, and the longitudinal member 4 can be raised slightly and the heads of the rollers 2 in turn also can be raised from their seat, designated by 16 in the drawings.

The chain turns the shafts 5 and the entire surface composed by the rollers 2 is thus motorized.

When the loading or unloading operations have been completed, the longitudinal member 4 moves downwards, depositing the rollers 2 back into their respective seats 16; said comb 15 disengages from the groove 14 and all the sleeves 7 retract towards the respective blocks 3.

In this manner, the laminae 9 diverge radially outwards, releasing the heads of the rollers 2.

Said comb 15 is then arranged at another series of rollers 2 to be clamped and rotationally motorized.

In practice it has been observed that the present invention achieves the intended aim.

The invention thus conceived is susceptible of numerous modifications and variations, all of which are within the scope of the inventive concept.

All the details may further be replaced with other technically equivalent ones.

In practice, the materials employed, as well as the shapes and the dimensions, may be any according to requirements without thereby abandoning the scope of the protection of the appended claims.

The disclosures in Italian Patent Application No. MO99A000117 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for engaging and motorizing free rollers which compose movable conveyance and storage surfaces, characterized in that it is constituted by a block (3) for positioning and fixing along a supporting longitudinal member (4), said block (3) being crossed by a shaft (5) which is supported so as to rotate freely and supports, at one end which protrudes from the block (3), means (6) for coupling to elements for transmitting rotary motion and, at the opposite end, a sleeve (7) which can slide coaxially back and forth and is provided with means (8) for sliding contact with at least one set of three flexible laminae (9) which are supported in a cantilevered manner by a head (10) which is rigidly coupled to said shaft (5) inside said sleeve (7), the active stroke of said sleeve (7) in a distal direction with respect to the block (3) causing the centripetal mutual closure of the laminae (9), the return stroke causing their mutual spacing.

2. The device according to claim 1, characterized in that said laminae (9) are shaped so as to diverge radially with respect to said head (10).

3. The device according to claims 1 and 2, characterized in that said laminae (9) have, at their free ends, corresponding pads (11) made of high-grip elastomeric material.

4. The device according to claim 1, characterized in that said transmission means (6) are constituted by at least one toothed wheel/sprocket (12) which is keyed to the respective end of said shaft (5) for coupling to a motorized chain which is closed in a loop and is supported by a corresponding conventional supporting means.

5. The device according to claim 1, characterized in that said sliding contact means (8) are constituted by a set of three pins (13) which are inserted transversely and in succession through the end of said sleeve (7) that is directed towards said laminae (9).

6. The device according to claims 1, 2 and 3, characterized in that said laminae (9) and said pins (13) are radially mutually aligned in mutual contact and along radial axes of symmetry which lie at 120° to each other.

7. The device according to the preceding claims, characterized in that a groove (14) for inserting an element (15) for activating by contact the active stroke of the sleeve (7) is formed between said block (3) and said sleeve (7).

8. The device according to claim 7, characterized in that said sleeve has, at its dorsal end and on the opposite side with respect to said laminae (9), corresponding means (7a, 7b) with low rolling friction for contact with said activator element (15).

9. The device according to claim 8, characterized in that said means with low rolling friction are constituted by a corresponding pivoting ring/bearing (7a) inserted coaxially in a corresponding seat (7b) formed in said dorsal end of the sleeve (7).
